# EUROPEAN PATENT SPECIFICATION

(11) **EP 1 673 954 B1**
(45) Date of publication and mention of the grant of the patent: **25.04.2007**
(21) Application number: 03748453.2
(22) Date of filing: 14.10.2003
(51) Int. Cl.: H04Q 7/24

(54) **AUTOMATIC DISTRIBUTION OF CAPABILITY AND CONFIGURATION INFORMATION BETWEEN MOBILE SWITCHING CENTERS IN A MOBILE COMMUNICATIONS NETWORK**
AUTOMATISCHE VERTEILUNG VON FÄHIGKEITS- UND KONFIGURATIONSINFORMATIONEN ZWISCHEN MOBILFUNKVERMITTLUNGSSTELLEN IN EINEM MOBILEN KOMMUNIKATIONSNETZ
REPARTITION AUTOMATIQUE DES INFORMATIONS DE CAPACITE ET DE CONFIGURATION ENTRE DES CENTRES DE COMMUTATION MOBILE DANS UN RESEAU DE TELECOMMUNICATIONS MOBILES

(43) Date of publication of application: 28.06.2006
(73) Proprietor: TELEFONAKTIEBOLAGET LM ERICSSON (publ), 164 83 Stockholm (SE)
(72) Inventor: NIKKELEN, Vincent, H-1051 Budapest (HU)
(74) Representative: Tonscheidt, Andreas
(86) International application number: PCT/IB2003/004526
(87) International publication number: WO 2005/039210

(56) References cited:
- WO-A-01/15465
- WO-A-98/51096
- US-B1- 6 178 172

## Description

### Field of the Invention

The present invention relates to mobile communication networks. In particular, and not by way of limitation, the present invention is directed to a system and method for achieving interoperability between telecommunication servers in a mobile communication network by automatically distributing capability and configuration information between the servers.

### Background Art

In existing mobile communication networks, interoperability between telecommunication servers such as Mobile Switching Centers (MSCs) is achieved through several procedures. First, each MSC stores/administers the capabilities of neighboring/reachable MSCs in the network. Second, each MSC transmits to receiving MSCs, all of the information needed for the features supported by the transmitting MSC. This includes information for features that are not supported by the receiving MSC. Third, newly introduced features are designed in such a way that backwards compatibility is not hampered.

There are several disadvantages of the existing procedures. Regarding network administration, the existing procedure of administering the capabilities of neighboring/reachable MSCs within each MSC utilizes a large amount of system resources. This is undesirable to network operators who must provide these resources even though the resources are not producing revenue. In addition, the procedure has a good chance of causing system failures due to human errors such as typing mistakes. For example, if an operator owns 50 MSCs in his network, and every MSC must contain capabilities information for all the other MSCs, then changing the configuration of a single MSC requires updating the 49 other MSCs with this new information.

The existing procedures also cause problems relating to bandwidth and processing capacity. Transmitting nodes currently transmit all of the information needed for the features supported by the transmitting MSC, even for features that are not supported by the receiving MSC. This is a waste of network bandwidth and processing capacity at both the transmitting and the receiving MSCs. For example, at inter-MSC handover, the anchor MSC sends BSSMAP/Radio Access Network Application Part (RANAP) Service Handover information to the target (i.e., non-anchor) MSC even though the non-anchor MSC may not support this feature. By way of further example, the anchor MSC always includes Shared Network Information (SNA), if available. In cases where the SNA is too large to fit in the BSSMAP Handover Request message, the SNA is sent in an extra BSSMAP Common ID message. These messages are sent even if the non-anchor MSC does not support this feature, or where there is no need for the information (e.g., the non-anchor MSC is not serving a shared area).

The design of newly introduced features in such a way that backwards compatibility is not hampered causes the introduction of inefficient functionality in the network. The Mobile Application Part (MAP) protocol ensures backward compatibility by initiating the MAP dialog between MSCs with the highest version supported by the initiating MSC. If the other MSC does not support this version, a fallback mechanism is utilized to downgrade to an older version of the protocol. In some cases, however, particularly in third generation systems, the proposed solutions for backward compatibility are overly complicated. In the 3rd Generation Partnership Project (3GPP), for example, for the introduction of codec negotiation over the E-interface, a complex solution has been proposed with the introduction of a new information element in order to ensure backward compatibility. The proposed solution also requires changing one of the major design principles in handover.

Another example of inefficient functionality for the sake of backward compatibility, is found in the optional function of Inter-MSC SRNS Relocation for multiple bearers. The anchor MSC first tries the function with all bearers available. If the non-anchor MSC does not support multiple bearers, the non-anchor MSC rejects the first attempt. The anchor MSC then tries again, but with only one bearer selected.

Published International Application WO 01/15465 discloses a method of handling subscriber services in a Wireless Intelligent Network (WIN) when a serving MSC does not support all WIN triggers. When a mobile station seeks access, the MSC is triggered to send an invoke message to the HLR with a WIN Capabilities parameter indicating the WIN triggers supported by the MSC. Although some capabilities information is shared, the amount of information is limited, and it is only shared when a mobile station seeks access. The information is not shared ahead of time so that network signaling and processing can be reduced.

Published International Application WO 98/51096 discloses a method for performing SCP database synchronization. The method enables expansion of SCP pairs by migrating records between SCPs when expansion is required. However, there is no disclosure or suggestion of sharing capability and configuration information between network servers so that network signaling and processing can be reduced.

Thus, there is much inefficiency in the existing procedures for achieving interoperability between MSCs in a mobile communication network. It would be advantageous to have a system and method for achieving interoperability by automatically distributing capability and configuration information between MSCs.

### Summary of the Invention

The present invention enables interoperability between MSCs by causing each MSC to send operational information such as capability and configuration information to neighboring MSCs following a reconfiguration, reset, or any other procedure that may have changed the capabilities or configuration of the affected MSC. Each neighboring MSC that supports the invention responds by sending its own capability and configuration information to the affected MSC. Thereafter, each MSC uses its knowledge of the capabilities and configuration of neighboring MSCs to send only the information that is needed to implement requested services or features.

Thus, in one aspect, the present invention is directed to a method of automatically distributing operational information between MSCs in a mobile communication network. The method includes the steps of defining for each MSC in the network, at least one neighboring MSC; performing a procedure that changes the first MSC's operational information; and upon completion of the procedure, automatically sending the first MSC's operational information from the first MSC to the first MSC's neighboring MSCs. This is followed by receiving and storing the first MSC's operational information in each of the first MSC's neighboring MSCs; and upon receiving the first MSC's operational information, sending operational information for each of the first MSC's neighboring MSCs from the neighboring MSCs to the first MSC. The operational information may include capability and configuration information.

In another aspect, the present invention is directed to a method of reducing signaling and processing requirements in a mobile communication network having a plurality of neighboring MSCs. The method includes the steps of automatically distributing operational information between the MSC's whenever an operational capability of one of the MSCs is changed; initiating a service in a first MSC; and upon initiating the service in the first MSC, sending to MSCs neighboring the first MSC, only information that the operational information stored in the first MSC indicates is supported by the neighboring MSCs.

In yet another aspect, the present invention is directed to an MSC that automatically distributes operational information for the MSC to neighboring MSCs in a mobile communication network. The MSC includes a communication signaling mechanism that automatically sends the MSC's operational information to at least one neighboring MSC upon start-up of the MSC, and receives in return, operational information for the at least one neighboring MSC. The MSC also includes means for storing the operational information for the at least one neighboring MSC. The operational information may include capability and configuration information. The MSC may also include means for initiating a service; means for determining from the stored capability and configuration information for the at least one neighboring MSC, which information related to the initiated service is supported by the at least one neighboring MSC; and means for sending to the at least one neighboring MSC, only the service-related information that is supported by the at least one neighboring MSC.

### Brief Description of the Drawings

FIG. 1 is a simplified block diagram illustrating a plurality of MSCs in a mobile communication network in which the present invention has been implemented;
FIG. 2 is a signaling diagram illustrating the automatic exchange of capability and configuration information between MSCs in one embodiment of the present invention; and
FIG. 3 is a flow chart illustrating the steps of one embodiment of the method of the present invention.

### Detailed Description of Embodiments

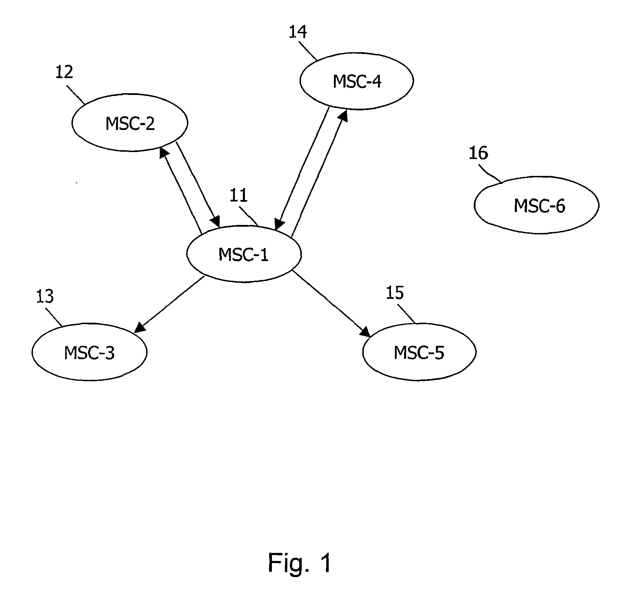

FIG. 1 is a simplified block diagram illustrating a plurality of MSCs 11-16 in a mobile communication network in which the present invention has been implemented. In the exemplary configuration illustrated, the network operator has defined for MSC-1 that MSC-2, MSC-3, MSC-4, and MSC-5 are neighboring MSCs. MSC-6 is not a neighboring MSC. In addition, MSC-1, MSC-2, and MSC-4 support the present invention. It is not relevant to the present invention whether or not MSC-6 supports the invention because MSC-6 is not a neighboring MSC. It should also be recognized that although the exemplary embodiment described herein utilizes the term "MSC", the invention is applicable to any telecommunication server.

In an exemplary scenario, MSC-1 is reconfigured and/or reset. Just before MSC-1 starts operation, MSC-1 sends its capability and configuration information to all of its defined neighboring MSCs. This is illustrated by the outgoing arrows from MSC-1 to MSC-2, MSC-3, MSC-4, and MSC-5. Since MSC-3 and MSC-5 do not support the present invention, they discard the information and continue to operate as before. Since MSC-2 and MSC-4 support the present invention, they store the received information and consider the information during operation. In addition, as shown by the incoming arrows to MSC-1, they send their own capability and configuration information to MSC-1.

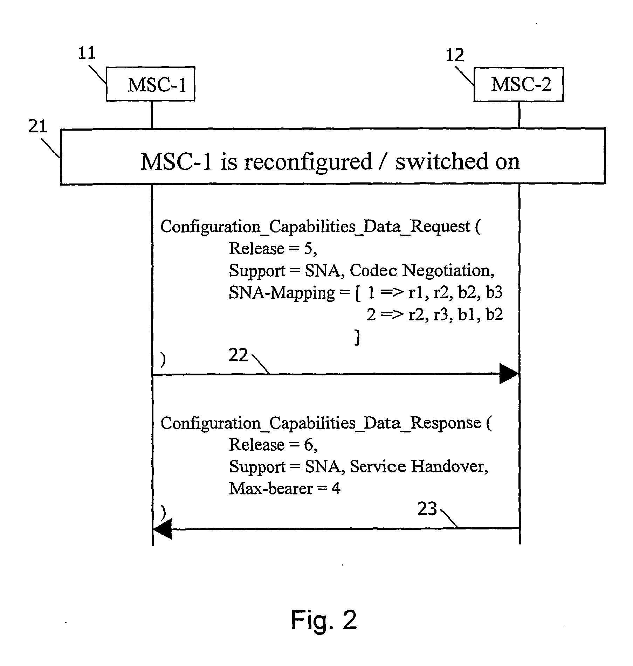

FIG. 2 is a signaling diagram illustrating the automatic exchange of capability and configuration information between MSCs in an exemplary embodiment of the present invention. It should be understood that the illustrated signaling messages and message contents are illustrative only, and that other messages, message formats, and message contents could also be utilized with the present invention. For simplicity, the interaction between only two MSCs is shown, but in reality the information is exchanged between the reset MSC and all of its defined neighbors that support the present invention.

Once MSC-1 is reconfigured or switched on at step 21, MSC-1 sends a message such as a Configuration Capabilities Data Request message 22 to neighboring MSC-2. In the exemplary message shown, MSC-1 indicates that it is compliant with the Third Generation Partnership Project (3GPP) release version 5 specification, it supports Shared Network Information (SNA), and it includes codec negotiation functionality. In addition, the message contains an indication of the SNA-information mapping utilized by MSC-1. This mapping enables MSC-1 to use a single value in communication with MSC-2 instead of a large amount of data (for example, the value 1 instead of r1, r2, b2, and b3; or the value 2 instead of r2, r3, b1, and b2).

Once MSC-2 receives the Configuration Capabilities Data Request message 22, MSC-2 stores the included information, and uses the information to make future operations more efficient. For example, MSC-2 will never send Service Handover information to MSC-1 because MSC-2 knows that MSC-1 does not support this information. In this manner, the invention saves both processing and signaling resources. In addition, MSC-2 prepares a response in the form of a Configuration Capabilities Data Response message 23. This message includes capability and configuration information for MSC-2. In the exemplary message shown, MSC-2 indicates that it is compliant with the 3GPP R6 specification, it supports SNA and Service Handover, and it can handle a maximum of four bearers. Upon receipt of the Configuration Capabilities Data Response message, MSC-1 stores the included information, and uses the information to make future operations more efficient.

Other capability and configuration data may also be included in the Configuration Capabilities Data Request message 22 and the Configuration Capabilities Data Response message 23. For example, proprietary information such as vendor identifications and vendor-specific features may also be indicated. Additionally, the messages may indicate exceptions to levels of functionality that are indicated. For example, if MSC-2 is compliant with 3GPP release version 6 except for one feature or capability, MSC-2 may indicate in its message that MSC-2 is compliant with 3GPP release version 6, but not the non-supported feature or capability.

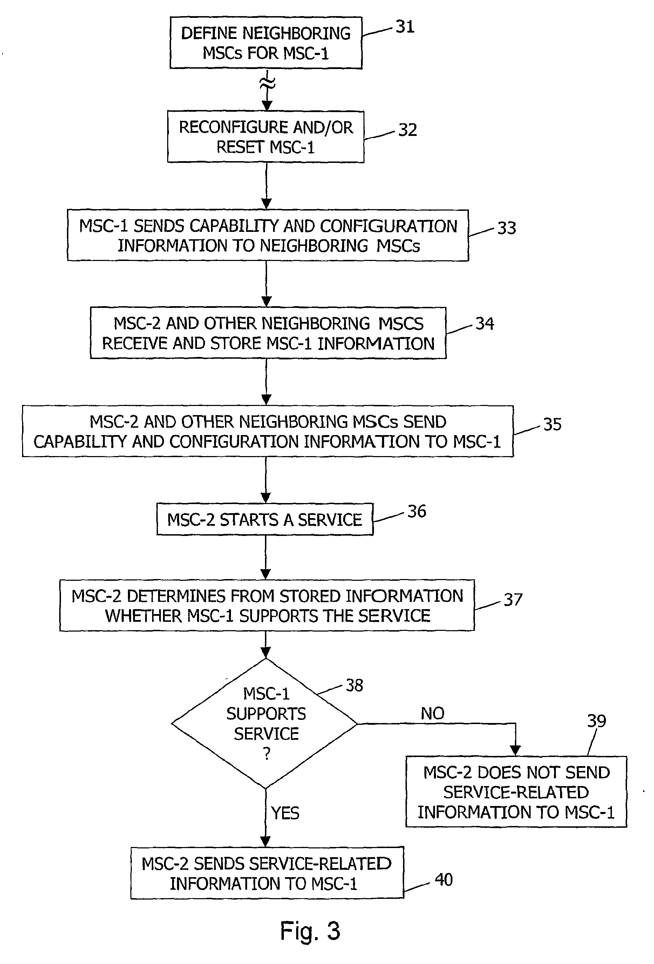

FIG. 3 is a flow chart illustrating the steps of one embodiment of the method of the present invention. At step 31, the neighboring MSCs for MSC-1 are defined. At some later time, as shown at step 32, MSC-1 may be reconfigured and/or reset. At step 33, following the reconfiguration/reset, MSC-1 sends its capability and configuration information to its neighboring MSCs. At step 34, the neighboring MSCs including, for example MSC-2, receive and store the MSC-1 capability and configuration information. At step 35, MSC-2 and the other neighboring MSCs send their own capability and configuration information to MSC-1.

At step 36, MSC-2 starts a service within the mobile communication network that requires the participation of other MSCs. At step 37, MSC-2 determines, from the capability and configuration information that it has stored for other MSCs, whether or not MSC-1 supports the service. At step 38, upon determining that MSC-1 does not support the service, the method moves to step 39 where MSC-2 does not send service-related information to MSC-1. This saves network bandwidth and relieves MSC-1 of the tasks of receiving the service-relaked information, analyzing the information to determine whether the information is useful, and discarding the information after determining that the information is for a service that MSC-1 does not support. However, upon determining at step 38 that MSC-1 does support the service, the method moves to step 40 where MSC-2 sends the service-related information to MSC-1. Thus, information is only sent from one MSC to another when the receiving MSC supports the service or functionality with which the information is associated,

Although the present invention has been described in detail with reference to only a few exemplary embodiments, those skilled in the art will appreciate that various modifications can be made without departing from the invention.

## Claims

1. A method of reducing signaling and processing requirements in a mobile communication network having a plurality of neighboring telecommunication servers (11, 12, 13, 14, 15), said method comprising the steps of:
automatically distributing capability and configuration information between the servers whenever a start-up server of the servers is started up or reconfigured, said distributing step including:
- automatically sending (33) the capability and configuration information for the start-up server, from the start-up server (11) to servers (12, 13, 14, 15) neighboring the start-up server (11);
- receiving and storing (34) the start-up server's capability and configuration information in each of the neighboring servers (12, 13, 14, 15); and
- upon receiving the start-up server's capability and configuration information, sending (35) capability and configuration information for each of the neighboring servers (12, 13, 14, 15) from the neighboring servers to the start-up server (11);
initiating (36) a service in a first server (12) that requires the participation of at least one given neighboring server;
determining (37) by the first server (12), whether the given neighboring server supports the service, based upon the capability and configuration information for the given neighboring server that the first server has received from the given neighboring server; and
sending from the first server (12) to the at least one neighboring server (14), only service-related information that is supported by the at least one neighboring server (14).

2. The method of claim 1, wherein the telecommunication servers (11, 12, 13, 14, 15) are Mobile Switching Centers, MSCs.

3. The method of claim 2, wherein the capability and configuration information sent by a given MSC includes an indication of a version of an industry standard with which the given MSC is compliant.

4. The method of claim 3, wherein the capability and configuration information includes exceptions for any capabilities of the version of the standard that are not supported by the given MSC.

5. A telecommunication server (11) that is adapted to automatically distribute capability and configuration information for the server to neighboring telecommunication servers (12, 13, 14, 15) in a mobile communication network, wherein said telecommunication server (11) comprises:
a communication signaling mechanism that is adapted to automatically send the server's capability and configuration information to at least one neighboring server (12, 13, 14, 15) upon start-up or when the capability and configuration information of the server is changed, and to receive in return, capability and configuration information for the at least one neighboring server (12, 14);
means for storing the capability and configuration information for the at least one neighboring server (12, 14);
means for initiating a service that requires the participation of at least one neighboring server;
means for determining from the stored capability and configuration information for the at least one neighboring server (12, 14), whether the at least one neighboring server (12, 14) supports the service; and
means for sending to the at least one neighboring server (12, 14), only the service-related information that is supported by the at least one neighboring server (12, 14).

6. The telecommunication server (11) of claim 5, wherein the server (11) is a Mobile Switching Center, MSC.

## Patentansprüche

1. Verfahren zum Reduzieren von Nachrichtenübermittlungs- und Verarbeitungs-Anforderungen in einem Mobilfunk-Kommunikationsnetz, das eine Vielzahl von benachbarten Telekommunikations-Servern (11, 12, 13, 14, 15) aufweist, wobei das Verfahren die folgenden Schritte umfasst:
automatisches Verteilen von Fähigkeits- und Konfigurationsinformationen zwischen den Servern, sobald ein Start-Server der Server gestartet oder neu konfiguriert wird, wobei der Verteilschritt Folgendes umfasst:
- automatisches Senden (33) der Fähigkeits- und Konfigurationsinformationen für den Start-Server vom Start-Server (11) zu den Servern (12, 13, 14, 15), die zum Start-Server (11) benachbart sind;
- Empfangen und Speichern (34) der Fähigkeits- und Konfigurationsinformationen des Start-Servers in jedem der benachbarten Server (12, 13, 14, 15); und
- nach dem Empfangen der Fähigkeits- und Konfigurationsinformationen des Start-Servers Senden (35) der Fähigkeits- und Konfigurationsinformationen für jeden der benachbarten Server (12, 13, 14, 15) von den benachbarten Servern zum Start-Server (11);
Initiieren (36) eines Dienstes, der die Teilnahme von wenigstens einem vorgegebenen benachbarten Server erfordert, in einem ersten Server (12);
Ermitteln (37) durch den ersten Server (12) auf Basis der Fähigkeits- und Konfigurationsinformationen für den vorgegebenen benachbarten Server, die der erste Server von dem vorgegebenen benachbarten Server empfangen hat, ob der vorgegebene benachbarte Server den Dienst unterstützt; und
Senden von dem ersten Server (12) zu dem wenigstens einen benachbarten Server (14) nur von dienstbezogenen Informationen, die von dem wenigstens einen benachbarten Server (14) unterstützt werden.

2. Verfahren nach Anspruch 1, in dem die Telekommunikations-Server (11, 12, 13, 14, 15) Funkvermittlungsstellen MSCs sind.

3. Verfahren nach Anspruch 2, in dem die von einer vorgegebenen MCS gesendeten Fähigkeits- und Konfigurationsinformationen eine Angabe über eine Version eines Industriestandards enthalten, mit der die bestimmte MSC konform ist.

4. Verfahren nach Anspruch 3, in dem die Fähigkeits- und Konfigurationsinformationen Ausnahmen für irgendwelche Fähigkeiten der Version des Standards enthalten, die von der bestimmten MSC nicht unterstützt werden.

5. Telekommunikations-Server (11), der so ausgelegt ist, dass er automatisch Fähigkeits- und Konfigurationsinformationen für den Server an benachbarte Telekommunikations-Server (12, 13, 14, 15) in einem Mobilfunk-Kommunikationsnetz verteilt, wobei der Telekommunikations-Server Folgendes umfasst:
einen Kommunikations-Nachrichtenübermittlungs-Mechanismus, der so ausgelegt ist, dass er die Fähigkeits- und Konfigurationsinformationen des Servers automatisch zu wenigstens einem benachbarten Server (12, 13, 14, 15) beim Einschalten oder bei einer Änderung der Fähigkeits- und Konfigurationsinformationen des Servers sendet und im Gegenzug Fähigkeits- und Konfigurationsinformationen für den wenigstens einen benachbarten Server (12, 14) empfängt;
Mittel zum Speichern der Fähigkeits- und Konfigurationsinformationen für den wenigstens einen benachbarten Server (12, 14);
Mittel zum Initiieren eines Dienstes, der die Teilnahme von wenigstens einem vorgegebenen benachbarten Server erfordert;
Mittel zum Ermitteln aus den gespeicherten Fähigkeits- und Konfigurationsinformationen für den wenigstens einen benachbarten Server (12, 14), ob der wenigstens eine benachbarte Server (12, 14) den Dienst unterstützt; und
Mittel zum Senden nur der dienstbezogenen Informationen, die von dem wenigstens einen benachbarten Server (12, 14) unterstützt werden, zu dem wenigstens einen benachbarten Server (12, 14).

6. Telekommunikations-Server (11) nach Anspruch 5, in dem der Server (11) eine Funkvermittlungsstelle MSC ist.

## Revendications

1. Procédé pour réduire les exigences de signalisation et de traitement dans un réseau de communication mobile comportant une pluralité de serveurs de télécommunication adjacents (11, 12, 13, 14, 15), ledit procédé comprenant les étapes consistant à :
distribuer automatiquement une information de capacité et de configuration entre les serveurs, chaque fois qu'un serveur de démarrage des serveurs est démarré ou reconfiguré, ladite étape de distribution incluant :
- l'envoi automatique (33) de l'information de capacité et de configuration pour le serveur de démarrage, du serveur de démarrage (11) aux serveurs (12,13,14,15) adjacents au serveur de démarrage (11) ;
- la réception et la mémorisation (34) de l'information de capacité et de configuration du serveur de démarrage dans chacun des serveurs adjacents (12,13,14,15) ; et
- lors de la réception de l'information de capacité et de configuration du serveur de démarrage, l'envoi (35) de l'information de capacité et de configuration pour chacun des serveurs adjacents (12,13,14,15) depuis les serveurs adjacents au serveur de démarrage (11) ;
lancer (36) un service dans un premier serveur (12) qui nécessite la participation d'au moins un serveur adjacent donné ;
déterminer (37) par le premier serveur (12) si le serveur adjacent donné supporte le service, sur la base de l'information de capacité et de configuration pour le serveur adjacent donné que le premier serveur a reçu du serveur adjacent donné ; et
envoyer du premier serveur (12) vers au moins un serveur adjacent (14) uniquement l'information relative au service qui est supportée par au moins un serveur voisin (14).

2. Procédé de la revendication 1, dans lequel les serveurs de télécommunication (11,12,13, 14,15) sont des centres de commutation pour les services mobiles, MSCs.

3. Procédé de la revendication 2, dans lequel l'information de capacité et de configuration envoyée par un MSC donné inclut une indication d'une version d'une norme industrielle à laquelle le MSC donné se conforme.

4. Procédé de la revendication 3, dans lequel l'information de capacité et de configuration inclut des exceptions à de quelconques capacités de la version de la norme qui ne sont pas supportées par le MSC donné.

5. Serveur de télécommunication (11) qui est adapté afin de distribuer automatiquement une information de capacité et de configuration pour le serveur vers des serveurs de télécommunication adjacents (12,13,14,15) dans un réseau de communication mobile, moyennant quoi ledit serveur de télécommunication (11) comprend :
un mécanisme de signalisation de communication qui est adapté afin d'envoyer automatiquement l'information de capacité et de configuration du serveur vers au moins un serveur adjacent (12,13,14,15) lors du démarrage ou lorsque l'information de capacité et de configuration du serveur est modifiée, et de recevoir en retour une information de capacité et de configuration pour au moins un serveur adjacent (12,14) ;
un moyen pour mémoriser l'information de capacité et de configuration pour au moins un serveur adjacent (12,14) ;
un moyen pour lancer un service qui nécessite la participation d'au moins un serveur adjacent ;
un moyen pour déterminer à partir de l'information de capacité et de configuration mémorisée pour au moins un serveur adjacent (12,14) si au moins un serveur voisin (12,14) supporte le service ; et
un moyen pour envoyer vers au moins un serveur adjacent (12,14) uniquement l'information relative au service qui est supportée par au moins un serveur adjacent (12, 14).

6. Serveur de télécommunication (11) de la revendication 5, dans lequel le serveur (11) est un centre de commutation pour les services mobiles, MSC.
